# EUROPEAN PATENT APPLICATION

(11) **EP 4 020 741 A1**
(43) Date of publication of application: **29.06.2022**
(21) Application number: 20425061.7
(22) Date of filing: 23.12.2020
(51) Int. Cl.: H02J 3/30, H02J 3/18, H02J 15/00, H02J 3/46, F02C 7/36

(54) **A SYSTEM FOR STABILIZING A DISTRIBUTION ELECTRIC GRID**

(71) Applicant: ANSALDO ENERGIA S.p.A., 16152 Genova (IT)
(72) Inventor: Rinosi, Marco, 16152 Genova (IT); Tomaino, Gianluca, 16152 Genova (IT)
(74) Representative: Cicchetti, Angelo

(57) **Abstract**

A system for stabilizing a distribution electric grid, the system (1; 100) comprising a gas turbine (3; 103), a clutch (4; 104), a flywheel (7; 107), and an electric rotating machine (5; 105) configured to be coupled to a distribution electric grid (2); wherein the gas turbine (3; 103) and the electric rotating machine (5; 105) are connected by the clutch (4; 104) to operatively couple or decouple the gas turbine (3; 103) and the electric rotating machine (5; 105); the system (1; 100) being configured to operate in a first operational mode or in a second operational mode; wherein in the first operational mode the system is configured to generate and supply electric power to the distribution electric grid (2) preferably to compensate sudden increases of electric loads on the distribution electric grid and/or sudden lacking of power supplies on the distribution electric in particular from renewable energy plant; and in the second operational mode the system (1; 100) is configured to operate as a rotating electric condenser, in particular a synchronous condenser, preferably to supply or absorb reactive electric power to or from the distribution electric grid (2) in order to stabilize the distribution electric grid (2).

## Description

### Field of the Invention

The technical field of the present invention relates to the field of the system for stabilizing a distribution electric grid. In particular, the present invention refers to a power plant that is suitable to stabilize the distribution electric grid in order to keep constant frequency and voltage in particular compensating electric reactive power preferably by providing or absorbing reactive electric power, as well as providing a fast electrical response to the peak demand of electric power preferably by suppling electric power.

In particular, considering the evolution of energy market where renewable energy plants will be more used, distribution electric grid needs to be stabilized more frequently.

### Description of prior art

Nowadays said stabilization is demanded to Peaker Power Plant or a Synchronous Condensers based on the actual status of the distribution electric grid. In further detail, when is necessary more energy, for example due to a sudden increase of electric load or a sudden decrease of energy produced in particular by renewable energy plant, the Peaker power plant is used, in particular providing electric power and/or stabilizing and/or adjusting at least an electric parameter of the distribution electric grid in particular voltage and/or frequency and reducing the risk of black-outs; while for example when renewable energy are in operation and/or reactive power changes during the time, synchronous condensers are used to stabilize the distribution electric grid, in particular providing or absorbing reactive electric power and/or stabilizing and/or adjusting at least an electric parameter of the distribution electric grid in particular voltage and/or frequency and reducing the risk of black-outs.

This means that a national electric system for supplying electric energy comprises at least a general power plant, at least a renewable energy power plant, a distribution electric grid, at least a peaker power plant and at least a synchronous condenser.

The drawback of the state of art is that said national electric system for supplying electric energy comprises a lot of devices to stabilize the at least an electric parameter of the distribution electric grid and to reduce the risk of black-outs.

### Disclosure of the invention

A scope of the present invention is to provide a system to reduce or overcome at least one drawback of the state of art.

According to the present invention is provided a system according to one of claims from 1 to 7.

Thanks to the invention, the system can stabilize the electric distribution grid in all circumstances and hence with a sole plant is possible to compensate all needs and/or demands of the electric distribution grid, in particular the system can act when is required more electric power and also when is required to balance or compensate electric reactive power by absorbing or suppling electric reactive power. In particular, the system is able to compensate the electric distribution grid in all cases, because with a sole plant can operate for providing electric power, hence can act as a peaker power plant and can operate for providing or absorbing electric reactive power, hence can operate as a synchronous condenser.

Another scope of the present invention is to provide a method to reduce or overcome at least one drawback of the state of art.

According to the present invention is provided a method according to one of claims from 8 to 14.

It is to be understood that both the foregoing general description and the following detailed description are exemplary and are intended to provide further explanation of the invention as claimed. Other advantages and features of the invention will be apparent from the following description, drawings and claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of an example of a first embodiment of the system according to the present invention; and
- figure 2 is a schematic view of an example of a second embodiment of the system according to the present invention.

### Detailed description of preferred embodiments of the invention

In association with the attached drawings, the technical contents and detailed description of the present invention are described thereinafter according to the preferred embodiments, being not used to limit its executing scope. Any equivalent variation and modification made according to appended claims is all covered by the claims claimed by the present invention.

Reference will now be made to the drawing figures to describe the present invention in detail.

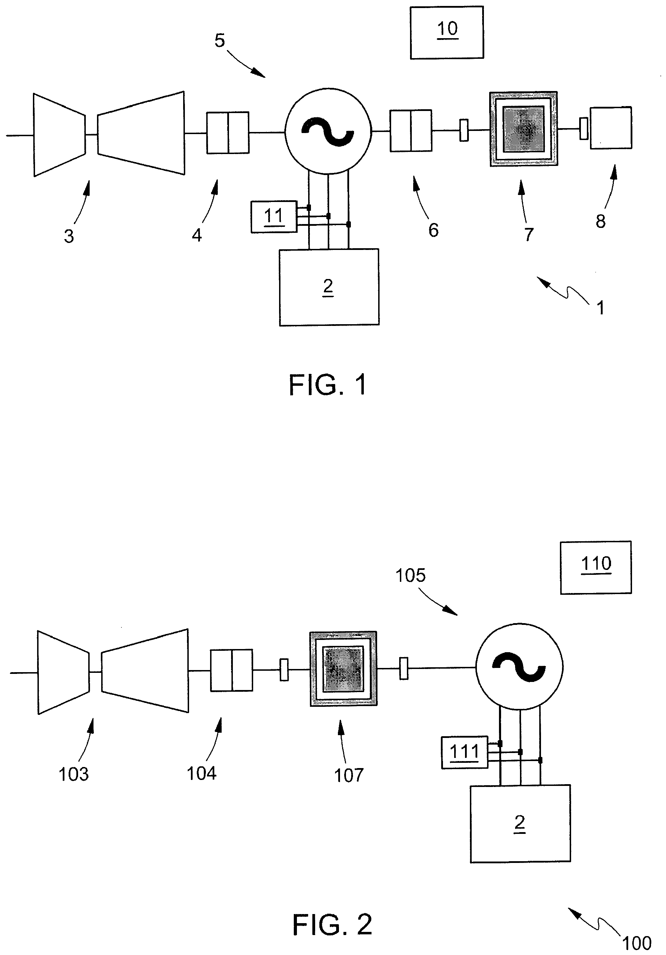

Reference is made to figure 1 which is a schematic view of an example of a first embodiment of a system 1 for stabilizing a distribution electric grid 2 according to the present invention.

In particular, the system 1 is configured to stabilize the distribution electric grid 2 by suppling electric power, in particular electric active power, in order to compensate the electric loads in particular to compensate sudden increases of electric loads on the distribution electric grid and/or sudden lacking of power supplies on the distribution electric grid 2.

Further, the system 1 is configured to stabilize the distribution electric grid 2 to balance electric reactive power on the distribution electric grid 2 by absorbing electric reactive power from or suppling electric reactive power to the distribution electric grid 2.

In particular, the system 1 is configured to stabilize or adjust at least an electric parameter of the distribution electric grid 2.

In all the description, the term "at least an electric parameter" of the distribution electric grid 2 is referred to at least an electric parameter selected into a group of electric parameters of the distribution electric grid 2 comprising: voltage; frequency; electrical phase shift; reactive electric power; active electric power; and power factor.

In particular, the system 1 comprises a gas turbine 3, a clutch 4, an electric rotating machine 5, a clutch 6, and a flywheel 7.

In particular, the flywheel 7 is configured to increase the inertia of the electric rotating machine 5 when is operatively coupled to the electric rotating machine 5.

In particular, the gas turbine 3 comprises a compressor, a combustor assembly and a turbine. Preferably, the compressor and the turbine extend along a main axis. In an example of the embodiment, the combustor assembly can be a can combustor assembly comprising a plurality of can combustors arranged as a ring around the main axis as well as an annular combustion chamber composed by several burners or silo combustion chambers. Each can-combustor may be configured for generating a double or sequentially staged combustion or a single-stage combustion. The compressor of the gas turbine 3 provides a compressed airflow, which is mixed with fuel and burned in each can combustor.

In particular, the electric rotating machine 5 is electrically coupled to the distribution electric grid 2 to supply electric power, in particular electric active power, and/or to absorb or supply electric reactive power. In particular, the electric rotating machine 5 is configured to operate as an electric generator or a synchronous condenser based on the status and/or the needs and/or the demands of the distribution electric grid 2 preferably to compensate sudden increases of electric loads on the distribution electric grid 2 and/or sudden lacking of power supplies on the distribution electric grid 2 and/or to supply or absorb electric reactive power to or from the distribution electric grid 2 and in particular to stabilize or adjust the at least an electric parameter of the distribution electric grid 2.

Further, the gas turbine 3 and the electric rotating machine 5 are connected by the clutch 4 to operatively be coupled or be decoupled. In other words, the clutch 4 is configured to couple or decouple the gas turbine 3 and the electric rotating machine 5 between them.

In particular, the clutch 4 is connected from one side to the gas turbine 3 and from another side to the electric rotating machine 5.

Further, the electric rotating machine 5 and the flywheel 7 are connected by the clutch 6 to be operatively coupled or decoupled. In other words, the clutch 6 is configured to couple or decouple the electric rotating machine 5 and the flywheel 7 between them. In particular, the clutch 6 is connected from one side to the electric rotating machine 5 and from the other side to the flywheel 7 .

In a preferred embodiment that is to be intended as not limiting the scope of the present invention, the system 1 comprises a turning gear 8 (also called jacking gear), in particular an electric motor 8, operatively connected to the flywheel 7, which works as a turning gear system of the flywheel 7 in particular when the gearbox 6 is disengaged. Preferably, the turning gear 8 acts to adjust the rotation speed of the flywheel 7.

In an embodiment of the invention, the turning gear 8 adjusts the rotation speed of the flywheel 7 before that the clutch 6 is engaged so that the speed of the flywheel 7 and the speed of the electric rotating machine 5 are the same or the difference of the speeds is within a range so that the clutch 6 can be engaged without damage to the clutch 6 and/or to the flywheel 7 and/or to the electric rotating machine 5.

The system 1 is configured to operate in a first operational mode or in a second operational mode based on demands and/or needs and/or status of the distribution electric grid 2, in particular the system 1 comprises a control unit 10 wherein is possible to select the first operational mode or the second operational mode.

The selection between the first operational mode and the second operational mode can be made manually by an operator preferably based on demands and/or needs and/or status of the distribution electrical grid 2, in this case the operator selects the first or the second operational mode acting on the control unit 10 for example by means of an interface of the control unit 10. In particular, the control unit 10 can comprise an interface suitable to communicate with an operator and the operator can select the first or the second operational mode to be sent to the control unit 10 by the interface. Preferably, the operator selects the first or the second operational mode based on the needs and/or demands and/or status of the distribution electric grid 2 in particular based on the electric loads to be supplied by the distribution electric grid 2 and/or the reactive electric power to be compensated.

In a further embodiment, the selection between the first operational mode or the second operational mode can be made automatically by the control unit 10 based on a data relating an information about the need and/or status and/or demand of the distribution electrical grid 2, wherein the data is received or detected by the control unit 10 for example from a remote unit.

In a further embodiment, the selection between the first operational mode or the second operational mode can be made automatically by the control unit 10 based on a data relating the at least one parameter of the distribution electrical grid 2, wherein the data is received or detected by the control unit 10.

In a further preferred embodiment not limiting the scope of the invention, the system 1 can comprises a detection device 11 coupled to the distribution electric grid 2 to detect the at least an electric parameter of the distribution electric grid 2. Further, the detection device 11 is coupled to the control unit 10 to send the at least an electric parameter of the distribution electric grid 2 to the control unit 10. Hence, in said embodiment the control unit 10 is coupled to the distribution electric grid 2. In a said embodiment, the control unit 10 can select the first or the second operational mode based on the detected electrical parameter of the distribution electric grid 2.

In a further preferred embodiment not limiting the scope of the invention, the system 1 is configured to select the first or the second operating mode by means of a combination of the previous embodiments, in particular the system 1 can select the first or the second operating mode based on the command of the operator and/or on the received and/or detected data of the distribution electric grid 2.

With reference to the figure 1 and in all embodiments of the present invention, in the first operational mode, the clutch 4 is engaged and the gas turbine 3 and the electric rotating machine 5 are operatively coupled so that the gas turbine 3 provides kinetic energy to the electric rotating machine 5 and the electric rotating machine 5 is configured to operate as an electric generator to generate and supply electric power, in particular electric active power, to the distribution electric grid 2.

Further, in the first operational mode, the clutch 6 is disengaged and the electric rotating machine 5 and the flywheel 7 are operatively decoupled preferably so that the electric rotating machine 5 and the flywheel 7 do not to transfer kinetic energy between them preferably in order to not lose mechanic and/or electric active power of the electric rotating machine 5.

In the second operational mode, the clutch 4 is disengaged and the gas turbine 3 and the electric rotating machine 5 are operatively decoupled so that the gas turbine 3 is configured not to provide kinetic energy to the electric rotating machine 5.

Further, in the second operational mode the clutch 6 is engaged and the electric rotating machine 5 and the flywheel 7 are operatively coupled so that the electric rotating machine 5 and the flywheel 7 are configured to transfer kinetic energy between them. In particular, in the second operational mode the electric rotating machine 5 is configured to operate as a rotating electric condenser, in particular a synchronous condenser, preferably to supply or absorb reactive electric power to or from the distribution electric grid 2 in order to stabilize the distribution electric grid 2, in particular to stabilize and/or to adjust the at least electric parameter of the distribution electric grid 2.

As said above, the control unit 10 is configured to select the first operational mode or the second operational mode based on needs and/or demands and/or status of the distribution electric grid 2.

In particular, the control unit 10 is configured to select the first operational mode or the second operational mode based on a command of an operator preferably by the interface.

In an alternative embodiment, the control unit 10 is configured to select the first operational mode or the second operational mode, preferably automatically, based on received or detected data regarding the distribution electric grid 2 and/or the at least an electric parameter of the distribution electric grid 2.

In a further preferred embodiment not limiting the scope of the invention, the control unit 10 is configured to select the first or the second operating mode by means of a combination of the previous embodiments, in particular the control unit 10 can select the first or the second operating mode based on the command of the operator and/or on the received and/or detected data of the distribution electric grid 2.

In more details, the control unit 10 is coupled to the electric rotating machine 5 to control the setting of the electric rotating machine 5.

Further the control unit 10 is coupled to the clutch 4 to engage or disengage the clutch 4 based on the first operational mode or the second operational mode.

Further the control unit 10 is coupled to the clutch 6 to engage or disengage the clutch 6 based on the first operational mode or the second operational mode.

In particular, the control unit 10 is configured to engage the clutch 4 and disengage the clutch 6 into the first operational mode. The control unit 10 is configured to control the electric rotating machine 5 in order to operate as an electric generator into the first operational mode.

Further, the control unit 10 is configured to disengage the clutch 4 and engage the clutch 6 into the second operational mode. The control unit 10 is configured to control the electric rotating machine 5 in order to operate as a rotating condenser into the second operational mode.

Figure 2 is a schematic view of an example of a second embodiment of a system 100 for stabilizing a distribution electric grid 2 according to the present invention.

In particular, the system 100 is configured to stabilize the distribution electric grid 2 by suppling electric power, in particular electric active power, in order to compensate the electric loads in particular to compensate sudden increases of electric loads on the distribution electric grid and/or sudden lacking of power supplies on the distribution electric grid 2.

Further, the system 100 is configured to stabilize the distribution electric grid 2 to compensate electric reactive power on the distribution electric grid 2 by absorbing electric reactive power from or suppling electric reactive power to the distribution electric grid 2.

In particular, the system 100 is configured to stabilize or adjust the at least an electric parameter of the distribution electric grid 2.

In particular, the system 100 comprises a gas turbine 103, a clutch 104, an electric rotating machine 105, and a flywheel 107.

In particular, the flywheel 107 is configured to increase the inertia of the electric rotating machine 105 when it is operatively coupled to the electric rotating machine 105.

In particular, the gas turbine 103, like the gas turbine 3, comprises a compressor, a combustor assembly and a turbine. Preferably, the compressor and the turbine extend along a main axis. In an example of embodiment, the combustor assembly can be a can combustor assembly comprising a plurality of can combustors arranged as a ring around the main axis as well as an annular combustion chamber composed by several burners or a silo combustion chambers. Each can-combustor may be configured for generating a double or sequentially staged combustion or a single-stage combustion. The compressor of the gas turbine 103 provides a compressed airflow, which is mixed with fuel and burned in each can combustor.

In particular, the electric rotating machine 105, like the electric rotating machine 5, is electrically coupled to the distribution electric grid 2 to supply electric power and/or to absorb or supply reactive electric power. In particular, the electric rotating machine 105 is configured to act as an electric generator or a synchronous condenser based on the status and/or the needs and/or the demands of the distribution electric grid 2 preferably to compensate sudden increases of electric loads on the distribution electric grid and/or sudden lacking of power supplies on the distribution electric grid 2 and/or to supply or absorb electric reactive power to or from the distribution electric grid 2 and in particular to stabilize or adjust the distribution electric grid 2 preferably the at least an electric parameter of the distribution electric grid 2.

Further, the gas turbine 103 and the electric rotating machine 105 are connected by the clutch 104 to operatively be coupled or be decoupled. In other words, the clutch 104 is configured to couple or decouple the gas turbine 103 and the electric rotating machine 105 between them.

In particular, the clutch 104 is connected from one side to the gas turbine 103 and from another side to the 5 flywheel 107.

The flywheel 107 is connected to one side to the clutch 104 and from another side to the electric rotating machine 105.

Hence, the gas turbine 103 is operatively connected to the electric rotating machine 105 by means of the clutch 104 and the flywheel 107.

The system 100 is configured to operate in a first operational mode or in a second operational mode based on the demands and/or needs and/or status of the distribution electric grid 2, in particular the system 100 comprises a control unit 110 wherein is possible to select the first operational mode or the second operational mode.

The selection between the first operational mode and the second operational mode can be made manually by an operator preferably based on the demands and/or needs and/or status of the distribution electrical grid 2, in this case the operator selects the first or the second operational mode acting on the control unit 110 for example by means of an interface. In particular, the control unit 110 can comprise an interface suitable to communicate with an operator and the operator can select the first or the second operational mode to be sent to the control unit 110 by the interface. Preferably, the operator selects the first or the second operational mode based on the needs and/or demands and/or status of the distribution electric grid 2 in particular based on requests of the electric loads to be supplied by the distribution electric grid 2 and/or the reactive electric power to be compensated.

In a further embodiment, the selection between the first operational mode or the second operational mode can be made automatically by the control unit 110 based on a data relating an information about the need and/or status and/or demand of the distribution electrical grid 2, wherein the data is received or detected by the control unit 110.

In a further embodiment, the selection between the first operational mode or the second operational mode can be made automatically by the control unit 110 based on a data relating the at least one parameter of the of the distribution electrical grid 2, wherein the data is received or detected by the control unit 110.

In a further preferred embodiment not limiting the scope of the invention, the system 100 can comprises a detection device 111 coupled to the distribution electric grid 2 to detect the at least an electric parameter of the distribution electric grid 2. Further, the detection device 111 is coupled to the control unit 110 to send the at least an electric parameter of the distribution electric grid 2 to the control unit 110. Hence, in said embodiment the control unit 110 is coupled to the distribution electric grid 2. In a said embodiment, the control unit 110 can select the first or the second operational mode based on the detected electrical parameter of the distribution electric grid 2.

In a further preferred embodiment not limiting the scope of the invention, the system 100 is configured to select the first or the second operating mode by means of a combination of the previous embodiments, in particular the system 100 can select the first or the second operating mode based on the command of the operator and/or on the received and/or detected data of the distribution electric grid 2.

With reference to the figure 2 and in all embodiments of the present invention, in the first operational mode, the clutch 104 is engaged and the gas turbine 103 and the electric rotating machine 105 are operatively coupled so that the gas turbine 103 provides kinetic energy to the electric rotating machine 105 and the electric rotating machine 105 is configured to operate as an electric to generate and supply electric power to the distribution electric grid 2.

In particular, in the first operational mode the clutch 104 is engaged and the gas turbine 103 and the electric rotating machine 105 are operatively coupled in particular via the flywheel 107 that is interposed between them.

In the second operational mode, the clutch 104 is disengaged and the gas turbine 103 and the electric rotating machine 105 are operatively decoupled in particular so that the gas turbine 103 is configured not to provide kinetic energy to the electric rotating machine 105.

Further, in the second operational mode the electric rotating machine 105 and the flywheel 107 are operatively coupled and in particular the flywheel 107 is not operatively coupled to the gas turbine 103.

Hence, the electric rotating machine 105 and the flywheel 107 are operatively coupled in particular so that the flywheel 107 can increase the inertia of the electric rotating machine 105. In the second operational mode the electric rotating machine 105 is configured to operate as a rotating electric condenser, in particular a synchronous condenser, preferably to supply or absorb reactive electric power to or from the distribution electric grid 2 in order to stabilize and/or to adjust the distribution electric grid 2, in particular to stabilize and/or to adjust the at least electric parameter of the distribution electric grid 2.

As said above, the control unit 110 is configured to select the first operational mode or the second operational mode based on the needs and/or demands and/or status of the distribution electric grid 2.

In particular, the control unit 110 is configured to select the first operational mode or the second operational mode based on a command of an operator.

In an alternative embodiment, the control unit 110 is configured to select the first operational mode or the second operational mode, preferably automatically, based on received or detected data regarding the need and/or status and/or demand of the distribution electric grid 2 and/or the at least an electric parameter of the distribution electric grid 2.

In a further preferred embodiment not limiting the scope of the invention, the control unit 110 is configured to select the first or the second operating mode by means of a combination of the previous embodiments, in particular the control unit 110 can select the first or the second operating mode based on the command of the operator and/or on the received and/or detected data of the distribution electric grid 2.

In more details, the control unit 110 is coupled to the electric rotating machine 105 to control the setting of the electric rotating machine 105.

The control unit 110 is coupled to the clutch 104 to engage or disengage the clutch 104 based on the first operational mode or the second operational mode.

In particular, the control unit 110 is configured to engage the clutch 104 into the first operational mode. The control unit 110 is configured to control the electric rotating machine 105 in order to operate as an electric generator into the first operational mode.

Further, the control unit 110 is configured to disengage the clutch 104 into the second operational mode. The control unit 110 is configured to control the electric rotating machine 105 in order to operate as a rotating condenser into the second operational mode.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A system for stabilizing a distribution electric grid, the system (1; 100) comprising a gas turbine (3; 103), a clutch (4; 104), a flywheel (7; 107), and an electric rotating machine (5; 105) configured to be coupled to a distribution electric grid (2); wherein the gas turbine (3; 103) and the electric rotating machine (5; 105) are connected by the clutch (4; 104) to operatively couple or decouple the gas turbine (3; 103) and the electric rotating machine (5; 105); the system (1; 100) being configured to operate in a first operational mode or in a second operational mode; wherein in the first operational mode the clutch (4; 104) is engaged and the gas turbine (3; 103) and the electric rotating machine (5; 105) are operatively coupled so that the gas turbine (3; 103) is configured to provide kinetic energy to the electric rotating machine (5; 105) and the electric rotating machine (5; 105) is configured to generate and supply electric power to the distribution electric grid (2) preferably to compensate sudden increases of electric loads on the distribution electric grid and/or sudden lacking of power supplies on the distribution electric grid (2) ; wherein in the second operational mode the clutch (4; 104) is disengaged and the gas turbine (3; 103) and the electric rotating machine are operatively decoupled preferably so that the gas turbine (3; 103) is configured not to provide kinetic energy to the electric rotating machine (5; 105); in the second operational mode the flywheel (7; 107) is operatively coupled to the electric rotating machine (5; 105), and the electric rotating machine (5; 105) is configured to operate as a rotating electric condenser, in particular a synchronous condenser, preferably to supply or absorb electric reactive power to or from the distribution electric grid (2) in particular in order to stabilize and/or adjust at least an electric parameter of the distribution electric grid (2), preferably the at least an electric parameter is selected into the group of electric parameters of the distribution electric grid (2) comprising: voltage; frequency; electrical phase shift; reactive electric power; active electric power; and power factor.

2. The system of claim 1, comprising a further clutch (6); the electric rotating machine (5) and the flywheel (7) are connected by the further clutch (6) to operatively couple or decouple the electric rotating machine (5) and the flywheel (7), wherein in the first operational mode the further clutch (6) is disengaged and the electric rotating machine (5) and the flywheel (7) are operatively decoupled preferably so that the electric rotating machine (5) and the flywheel (7) are configured not to transfer kinetic energy between them; wherein in the second operational mode the further clutch (6) is engaged and the electric rotating machine (5) and the flywheel (7) are operatively coupled preferably to increase the inertia of the electric rotating machine (5).

3. The system of claim 2, wherein the clutch (4) is connected from one side to the gas turbine (3) and from another side to the electric rotating machine (5); the further clutch (6) is connected from one side to the electric rotating machine (5) and from the other side to the flywheel (7) .

4. The system of claim 2 or 3, comprising a turning gear (8), wherein the flywheel (7) is connected to a turning gear (8) preferably so that the turning gear (8) can adjust a rotation speed of the flywheel (7).

5. The system of claim 1, wherein the clutch (104) is connected from one side to the gas turbine (103) and from another side to the flywheel (107), the flywheel (107) is connected to one side to the clutch (104) and from another side to the electric rotating machine (105); wherein in the first operational mode the clutch (104) is engaged and the gas turbine (103) and the electric rotating machine (105) are operatively coupled via the flywheel (107) which is interposed between them; wherein in the second operational mode the clutch (104) is disengaged and the flywheel (107) is operatively coupled to the electric rotating machine (105) and in particular the flywheel (107) is not operatively coupled to the gas turbine (103), and the electric rotating machine (105) is configured to operate as a rotating electric condenser, in particular a synchronous condenser, preferably to supply or absorb reactive electric power to or from the distribution electric grid (2) in particular in order to stabilize and/or adjust the at least an electric parameter of the distribution electric grid (2).

6. The system of any one of the previous claims, wherein the system (1; 100) is configured:
to receive a command from an operator for indicating the selection of the first or the second operating mode; and/or
to receive and/or to detect a data regarding an information about the status and/or the needs and/or demands of the distribution electric grid (2), preferably an information regarding the at least an electric parameter of the distribution electric grid (2);
the system (1; 100) being configured to select the first operational mode or the second operational mode based on the command of the operator and/or on the received and/or detected data of the distribution electric grid (2).

7. The system of claim 6, comprising a control unit (10; 110) configured to receive the command of the operator and/or on the received and/or detected data of the distribution electric grid (2); wherein the control unit (10; 110) is coupled to the electric rotating machine (5; 105) to control the setting of the electric rotating machine (5; 105); and to the clutch (4; 104) to engaging or disengaging the clutch (104); wherein the control unit (10; 110) is configured to engaging the clutch (4; 104) into the first operational mode and disengaging the clutch (4; 104) into the second operational mode; and the control unit (10; 110) is configured to control the electric rotating machine (5; 105) in order to operate as an electric generator into the first operational mode; the control unit (10; 110) is configured to control the electric rotating machine (5; 105) in order to operate as a rotating condenser into the second operational mode.

8. Control method to control a system for stabilizing a distribution electric grid; wherein the system comprising a gas turbine (3; 103), a clutch (4; 104), a flywheel (7; 107), and an electric rotating machine (5; 105) configured to be coupled to a distribution electric grid (2); wherein the gas turbine (3; 103) and the electric rotating machine (5; 105) are connected by the clutch (4; 104) to operatively couple or decouple the gas turbine (3; 103) and the electric rotating machine (5; 105); the method comprising the steps of operating in a first operational mode or in a second operational mode; wherein in the first operational mode the method comprises the steps of: engaging the clutch (4; 104) in order to operatively couple the gas turbine (3; 103) and the electric rotating machine (5; 105) so that the gas turbine (3; 103) provides kinetic energy to the electric rotating machine (5; 105) and the electric rotating machine (5; 105) generates and supplies electric power to the distribution electric grid (2); wherein in the second operational mode the method comprises the steps of: disengaging the clutch (4; 104) to operatively decouple the gas turbine (3; 103) and the electric rotating machine (5; 105) preferably so that the gas turbine (3; 103) does not provide kinetic energy to the electric rotating machine (5; 105); operatively coupling the flywheel (7; 107) to the electric rotating machine (5; 105); controlling the electric rotating machine (5; 105) in order to operate as a rotating electric condenser, in particular a synchronous condenser, preferably to supply or absorb reactive electric power to or from the distribution electric grid in particular in order to stabilize and/or adjust at least an electric parameter of the distribution electric grid (2), wherein the at least an electric parameter is selected into a group of electric parameters of the distribution electric grid (2) comprising: voltage; frequency; electrical phase shift; reactive electric power; active electric power; power factor.

9. Control method of claim 8, wherein the system (1) comprising a further clutch (6); the electric rotating machine (5) and the flywheel (7) are connected by the further clutch (6) to operatively couple or decouple the electric rotating machine (5) and the flywheel (7); wherein in the first operational mode the method comprising the step of disengaging the further clutch (6) in order to operatively decoupled the electric rotating machine (5) and the flywheel (7) preferably so that the electric rotating machine (5) and the flywheel (7) are configured not to transfer kinetic energy between them; wherein in the second operational mode the method comprising the step of engaging the further clutch (6) in order to operatively couple the electric rotating machine (5) and the flywheel (7) preferably to increase the inertia of the electric rotating machine (5).

10. Control method of claim 9, wherein the clutch (4) is connected from one side to the gas turbine (3) and from another side to the electric rotating machine (5); the further clutch (6) is connected from one side to the electric rotating machine (5) and from the other side to the flywheel (7) .

11. Control method of claim 9 or 10, the system (1) comprising a turning gear (8), wherein the flywheel (7) is connected to a turning gear (8); the method comprising the step of adjusting a rotation speed of the flywheel (7) by the turning gear (8).

12. Control method of claim 8, wherein the clutch (104) is connected from one side to the gas turbine (103) and from another side to the flywheel (107), the flywheel (107) is connected to one side to the clutch (104) and from another side to the electric rotating machine (105); wherein in the first operational mode the method comprising the step of engaging the clutch (104) in order to operatively coupled the gas turbine (103) and the electric rotating machine (105), in particular via the flywheel (107) that is interposed between them; wherein in the second operational mode the method comprising the step of disengaging the clutch (104) in order to decoupled the gas turbine (103) to the electric rotating machine (105); operatively coupling the flywheel (107) to the electric rotating machine (105); and controlling the electric rotating machine (105) to operate as a rotating electric condenser, in particular a synchronous condenser, preferably to supply or absorb reactive electric power to or from the distribution electric grid (2) in order to stabilize the at least an electric parameter.

13. Control method of any one of the claim from 8 to 12, comprising the step of: receiving a command from an operator for indicating the selection of the first or the second operating mode; and/or receiving and/or detecting a data regarding an information about the status and/or the needs and/or demands of the distribution electric grid (2), preferably an information regarding the at least an electric parameter of the distribution electric grid (2);
the method comprising the step of selecting the first operational mode or the second operational mode based on the command of the operator and/or on the received and/or detected data of the distribution electric grid (2).

14. Control method of claim 13, comprising the step of: engaging the clutch (4; 104) in the first operational mode and disengaging the clutch (4; 104) in the second operational mode; the method comprising the step of controlling the electric rotating machine (5; 105) in order to operate as an electric generator in the first operational mode and controlling the electric rotating machine (5; 105) in order to operate as a rotating condenser in the second operational mode.
